# EUROPEAN PATENT APPLICATION

(11) **EP 4 775 498 A2**
(43) Date of publication of application: **15.07.2026**
(21) Application number: 25213578.5
(22) Date of filing: 05.11.2025
(51) Int. Cl.: B65B 9/04, B29C 65/02, B29C 65/00, B65B 29/02, B65B 51/10, B65B 51/22, B65B 9/087, B65B 41/16, B65B 61/06

(54) **MANUFACTURING MACHINE AND MANUFACTURING METHOD FOR THE PRODUCTION OF POUCHES, EACH CONTAINING A QUANTITY OF A LOOSE PRODCT**

(30) Priority: 17.12.2024 IT 202400028680
(71) Applicant: Sasib S.p.A., 40013 Castel Maggiore (BO) (IT)
(72) Inventor: GHIOTTI, Roberto, 40013 CASTEL MAGGIORE (BO) (IT)
(74) Representative: Studio Torta S.p.A.

(57) **Abstract**

A manufacturing machine (6) and a manufacturing method for the production of pouches (1), each containing a quantity (2) of a loose product. There are two forming conveyors (7) having respective pockets (10) and around which two wrapping material bands (12) are wrapped which overlap each other in a joining area (9) enclosing corresponding quantities (2) for forming the pouches (1). There is a first sealing device (24), which is carried by at least one forming conveyor (7), is arranged around the pockets (10) and is configured to create, in the joining area (9), a seal (5) of an edge (4) of each pouch (1). There further is a second sealing device (25), which is arranged downstream of the joining area (9), is independent of and separate from the first sealing device (24) and is configured to consolidate the seal (5) of the edge (4) of each pouch (1).

## Description

### CROSS-REFERENCE TO RELATED APPLICATIONS

This patent application claims priority from Italian patent application no. 102024000028680 filed on December 17, 2024, the entire disclosure of which is incorporated herein by reference.

### TECHNICAL FIELD

The present invention relates to a manufacturing machine and to a manufacturing method for the production of pouches, each containing a quantity of a loose product (namely of a product devoid of a defined shape).

The present invention is advantageously applied to the production of snus pouches (namely permeable small bags, each containing a prepacked quantity of a tobacco- and/or nicotine-based loose product for oral use), to which the following disclosure will explicitly refer without thereby losing generality.

### PRIOR ART

Patent application WO2008114128A2 describes a snus manufacturing machine of the FFS ("*Form, Fill & Seal*") type for the production of pouches.

Patent application WO2024201339A1 describes a manufacturing machine for the production of snus pouches comprising: a first forming drum which is mounted so as to rotate and has a (at least one) pocket which reproduces in negative part of a shape of the pouch; a second forming drum which is mounted so as to rotate and is coupled to the first forming drum so as to define a joining area comprised between the two forming drums; a first feeding unit configured to feed, in a first feeding station arranged upstream of the joining area, a first wrapping material band, which wraps itself around part of the periphery of the first forming drum; a second feeding unit configured to feed, in a second feeding station arranged upstream of the joining area, a second wrapping material band, which wraps itself around part of the periphery of the second forming drum, so that the second wrapping material band overlaps the first wrapping material band in the joining area, thereby forming the pouch; and a third feeding unit configured to feed, in a third feeding station arranged between the insertion device and the joining area, the quantity of the loose product into the pocket of the first forming drum covered by the first wrapping material band.

A significant problem in the production of snus pouches, particularly when operating at a high production speed (measured as the number of snus pouches produced in the time unit) is ensuring that every snus pouch is perfectly closed, namely that the seals surrounding the snus pouch are sealed (namely do not allow the loose product to come out) and are strong enough to resist against the stresses that in use are applied to the snus pouch; in such regard, it is important to note that the snus pouches are intended for oral use (namely a user places the snus pouch in his/her mouth to slowly absorb part of the substances contained in the loose product dissolving them with the saliva) and it is thus essential to ensure that the snus pouch does not leak the loose product and does not break when it is in the mouth of a user. At the same time, it is also necessary to ensure that the quantity of snus contained in each pouch is not degraded (ruined) due to an excessive overheating that could occur during the sealing step of the edge of the pouch; in fact, the snus could also comprise substances that undergo irreversible changes (such as for example crystallization) when they exceed a certain temperature (generally lower than the melting temperature of the wrapping material with which the pouch is manufactured).

Patent application US2005022476A1 describes a machine for forming sealed small bags from a sealable material band in continuous movement; the machine comprises a first sealing station for forming a longitudinal seal along a side edge of the band and a horizontal sealing station for forming a plurality of transverse seals in the band.

Patent application JPH1149106A describes a method for controlling the position of the band in a sealing unit.

### DESCRIPTION OF THE INVENTION

The object of the present invention is to provide a manufacturing machine and a manufacturing method for the production of pouches, each containing a quantity of a loose product, said manufacturing machine and manufacturing method allowing ensuring that every snus pouch is perfectly closed even operating at a high production speed (measured as the number of snus pouches produced in the time unit) and, at the same time, allowing ensuring the integrity of the quantity of loose product contained in every snus pouch.

In accordance with the present invention, a manufacturing machine and a manufacturing method for the production of pouches, each containing a quantity of a loose product are provided, according to what claimed in the appended claims.

The claims describe preferred embodiments of the present invention forming integral part of the present description.

### BRIEF DESCRIPTION OF THE DRAWINGS

The present invention will now be described with reference to the accompanying drawings, which illustrate a non-limiting example embodiment thereof, wherein:
- Figures 1, 2 and 3 are a perspective view, a side view and a plan view, respectively, of a snus pouch;
- Figure 4 is an exploded side view of the snus pouch of Figures 1, 2 and 3; and
- Figure 5 is a schematic front view of a manufacturing machine which manufactures the snus pouches of the type of that of Figures 1, 2 and 3;
- Figures 6 and 7 are two schematic views of a sealing device of the manufacturing machine of Figure 5 in two different operating configurations; and
- Figures 8 and 9 are schematic views of two respective variants of the sealing device of Figures 6 and 7.

### PREFERRED EMBODIMENTS OF THE INVENTION

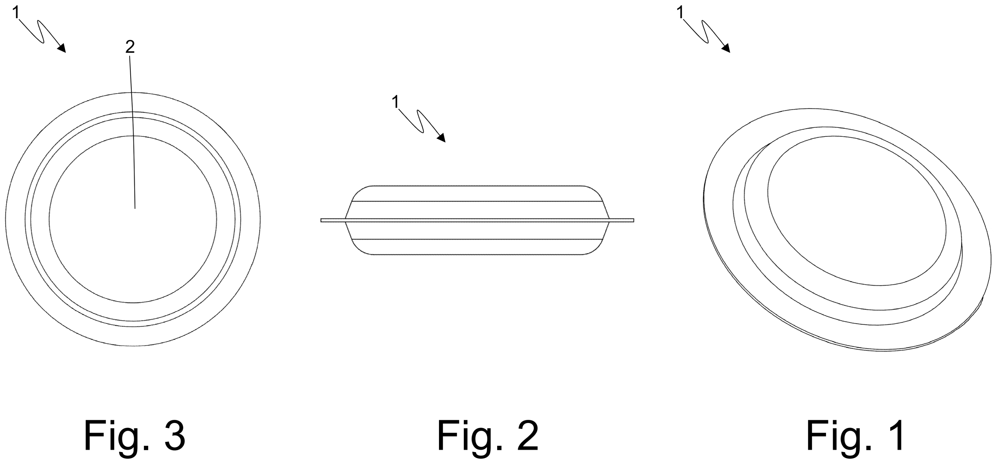

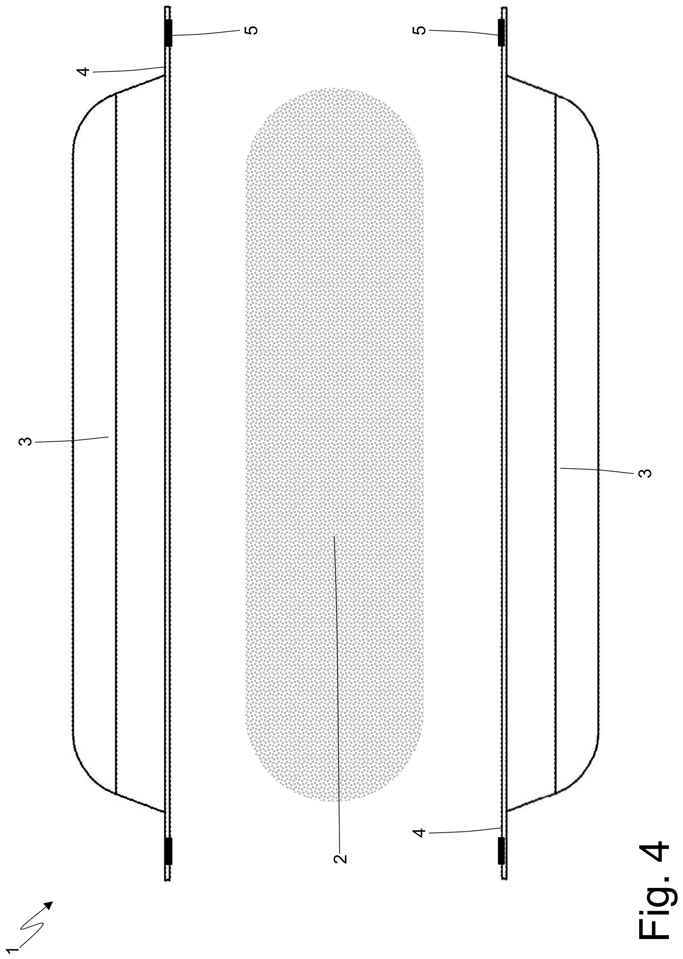

In Figure 1, reference numeral 1 indicates, as a whole, a snus pouch which contains, on the inside, a quantity 2 of snus (illustrated in Figure 4), namely of a tobacco- and/or nicotine-based loose product for oral use. A loose product is a product that does not have a defined shape, namely a product devoid of a shape of its own and which thus adapts to the shape of the container containing it. A loose product can be liquid or gelatinous or granular (such consistency also depends on the moisture content of a certain loose product). In the embodiment illustrated in the accompanying figures, the snus is a loose product (i.e. without a defined shape) of the granular type which contains, for example, tobacco and/or nicotine (normally mixed with other components).

In the embodiment illustrated in the accompanying figures, the snus pouch 1 has in plan a circular shape, but according to other embodiments the snus pouch 1 could have in plan different and more or less regular shapes, for example a star shape, a triangular shape, a heart shape, a polygonal shape.

According to what is illustrated in Figure 4, the snus pouch 1 comprises two cup-shaped elements 3 which are overlapped so as to delimit between them a closed volume in which the quantity 2 of snus is housed; each element 3 has a flat edge 4 which runs all the way around the element 3 so that the two flat edges 4 of the two elements 3 overlap and are joined by a seal 5 which is closed on itself (namely has an annular shape without head or tail). In other words, the pouch has one sole annular seal 5 (closed on itself without head or tail) which connects the two elements 3 to each other. It is understood that not necessarily both two elements 3 are cup-shaped; for example, one of them could be cup-shaped and the other one could be flat.

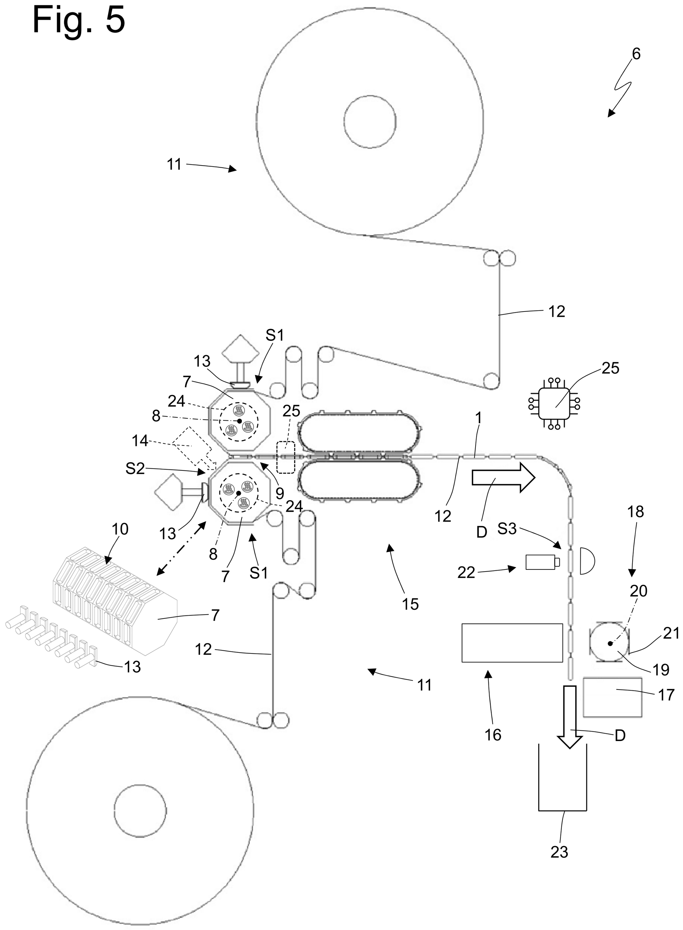

In Figure 5, reference numeral 6 indicates, as a whole, a manufacturing machine which produces the snus pouches 1.

The manufacturing machine 6 comprises a frame which rests on a floor and has a vertical support wall (the "*front*" wall of the manufacturing machine 6 and coinciding with the plane of Figure 5) on which all the operating components concurring to the production of the snus pouches 1 are mounted.

The manufacturing machine 6 comprises a first forming conveyor 7 which has at least one pocket 10 which reproduces in negative part of a shape of the snus pouch 1 and a second forming conveyor 7 which is coupled to the first forming conveyor 7 so as to define a joining area 9 comprised between the two forming conveyors 7.

In accordance with a preferred embodiment, the two forming conveyors 7 each comprise a forming drum. In particular, the manufacturing machine 6 comprises two forming drums (substantially identical to each other) which are mounted so as to rotate with a law of intermittent motion (namely a law of motion which cyclically alternates motion phases and stop phases) around respective rotation axes 8 which are horizontal and parallel to each other (and perpendicular to the plane of Figure 5).

The two forming drums are cooperating with (coupled to) each other and are arranged on top of each other so as to define a joining area 9 between them comprised between the two forming drums; namely the two forming drums are arranged vertically aligned at different heights so that one forming drum is on top and the other forming drum is underneath.

Each forming conveyor 7 has a plurality of pockets 10, each of which reproduces in negative part of a shape of the snus pouch 1; in particular, each pocket 10 reproduces in negative the shape of one of the two cup-shaped elements 3 which together constitute the snus pouch 1. Namely each pocket 10 (or seat 10) is a recess which is hollowed on the outer surface of the respective forming conveyor 7 and reproduces in negative the shape of one of the two cup-shaped elements 3 which together constitute the snus pouch 1. In the embodiment illustrated in the accompanying figures, each forming conveyor 7 has more groups (in particular, eight groups) of pockets 10, each having a series of pockets 10 (in particular, eight pockets 10) arranged side by side and aligned parallel to the rotation axis 8. In this manner, in the joining area 9 defined between the two forming conveyors 7, at every working cycle, a series of snus pouches 1 (in particular, eight snus pouches 1) are formed equal to the number of pockets 10 of each group. According to other embodiments not illustrated, the number of groups of pockets 10 of each forming conveyor 7 and/or the number of pockets 10 of each group could be different.

Each pocket 10 of one forming conveyor 7 always cooperates with a same corresponding pocket 10 of the other forming conveyor 7 and, in the embodiment illustrated in the accompanying figures, each pocket 10 reproduces in negative a shape of a corresponding half (namely of a cup-shaped element 3) of the snus pouch 1 so that two pockets 10 together reproduce in negative the shape of the snus pouch 1. Alternatively, one of the two forming conveyors 7 could be devoid of the pockets 10.

The manufacturing machine 6 comprises two feeding units 11 (substantially identical to each other), each of which is configured to feed, in a respective feeding station S1 arranged upstream of the joining area 9 relative to the advancement of the corresponding forming conveyor 7 (in particular relative to the direction of rotation of the respective forming drum), a respective wrapping material band 12. Each wrapping material band 12 wraps itself around part of the periphery of the respective forming conveyor 7. In this manner, in the joining area 9, the two forming conveyors 7 convey the two wrapping material bands 12 towards each other so that the two wrapping material bands 12 overlap and by joining form the snus pouches 1.

In other words, one sole and single wrapping material band 12 is fed and wrapped around each forming drum.

The two wrapping material bands 12 overlap only and exclusively in the joining area 9 forming each snus pouch 1 which encloses the quantity 2 of snus between the two wrapping material bands 12.

The manufacturing machine 6 comprises two insertion devices 13 (substantially identical to each other), each of which is coupled to a respective forming conveyor 7 between the respective feeding station S1 and the joining area 9 and is configured to push the respective wrapping material band 12 into the pockets 10 of a same group of pockets 10 of the respective forming conveyor 7. Namely, each insertion device 13 locally deforms the respective wrapping material band 12 so as to insert the wrapping material band 12 into the pockets 10 of a same group of pockets 10 of the respective forming conveyor 7 so that the wrapping material band 12 covers the pockets 10; in this manner, in each pocket 10, the wrapping material band 12 assumes the shape of a cup-shaped element 3, namely the shape of a half snus pouch 1. In accordance with different embodiments, the machine could be devoid of the insertion devices 13 or provide for only one insertion device 13 (for example in the case where only one of the two forming conveyors 7 provides for the pockets 10).

The manufacturing machine 6 comprises one single feeding unit 14 (schematically illustrated in Figure 5) configured to feed, in a feeding station S2 arranged between the feeding station S1 (in particular between the respective insertion device 13) and the joining area 9, a plurality of quantities 2 of snus into the pockets 10 of a group of pockets 10 of the respective forming conveyor 7 covered by the respective wrapping material band 12 (i.e. with the interposition of the respective wrapping material band 12). Namely one single feeding unit 14 is provided coupled to only one of the two forming conveyors 7 so as to feed into the pockets 10 of the respective forming conveyor 7 the quantities 2 of snus (which are held inside the pockets 10 by the sucking action of the pockets 10).

Alternatively, the manufacturing machine 6 could comprise more feeding units 14 configured to feed a plurality of quantities 2 of snus into the pockets 10 of a group of pockets 10 of the first forming conveyor 7 (covered by the respective wrapping material band 12) and a plurality of quantities 2 of snus into the pockets 10 of a group of pockets 10 of the second forming conveyor 7 (covered by the respective wrapping material band 12)

In other words, the two forming conveyors 7 constitute a wrapping system which forms the two wrapping material bands 12 around the quantities 2 of snus for making the snus pouches 1; according to a different embodiment not illustrated, the wrapping system described in the accompanying figures is replaced by a different wrapping system based on the FFS ("*Form, Fill & Seal*") technology which uses one sole wrapping material band 12 which is folded on itself in a tubelike manner.

According to what is illustrated in Figure 5, the manufacturing machine 6 comprises a conveying device 15, which is arranged downstream of the two forming drums and is configured to impart an advancement movement along a conveying path in an advancement direction D to the two overlapped wrapping material bands 12 and in which a sequence of rows of snus pouches 1 is present. The conveying device 15 is configured to advance the two overlapped wrapping material bands 12 according to a law of intermittent advancement (namely a law of motion which cyclically alternates motion phases and stop phases).

According to what is illustrated in Figure 5, the manufacturing machine 6 comprises a cutting unit 16, which is arranged downstream of the two forming conveyors 7 (namely downstream of the wrapping system) and along the advancement direction D (along the conveying path) and is configured to cut out the snus pouches 1 within the two overlapped wrapping material bands 12. According to a possible embodiment, the cutting unit 16 mechanically (namely by means of the movement of cutting elements which slide with respect to one another in the area of the cutting lines) cut the overlapped wrapping material bands 12 around the snus pouches 1. According to an alternative embodiment, the cutting unit 16 laser cuts the overlapped wrapping material bands 12 around the snus pouches 1.

According to what is illustrated in Figure 5, the manufacturing machine 6 comprises an output conveyor 17, which receives the snus pouches 1 from the cutting unit 16 and transports them towards an output of the manufacturing machine 6; in particular, the output conveyor 17 comprises a conveyor belt which has a law of intermittent motion (namely a law of motion which cyclically alternates motion phases and stop phases), is wrapped so as to form a ring around two end pulleys, and has a horizontal transport branch on which the snus pouches 1 are placed one after the other during a stop phase.

According to what is illustrated in Figure 5, the manufacturing machine 6 comprises a transfer unit 18 configured to retrieve a group of snus pouches 1 cut out by the cutting unit 16 and release the group of snus pouches 1 on the output conveyor 17. In particular, the transfer unit 18 comprises a support drum 19 mounted so as to rotate around a horizontal rotation axis 20 (and parallel to the rotation axes 8) and four groups of sucking retrieving heads 21 mounted on the support drum 19 (alternatively only two groups of sucking retrieving heads 21 or one sole group of sucking retrieving heads 21 could be provided). The rotation (with law of intermittent motion) of the support drum 19 around the rotation axis 20 leads each group of sucking retrieving heads 21 first in the area of the cutting unit 16 so as to engage (grab) a group of snus pouches 1 immediately before the action of the cutting unit 16 (namely immediately before the cutting unit 16 cuts out the snus pouches 1 from the overlapped wrapping material bands 12 freeing the snus pouches 1 from, namely making them independent of, the wrapping material bands 12) and subsequently in the area of the underlying output conveyor 17 so as to release the group of snus pouches 1 on the output conveyor 17.

In other words, each group of sucking retrieving heads 21 of the transfer unit 18 grabs (engages, holds) a corresponding group of snus pouches 1 which are located in the area of the cutting unit 16 before the cutting unit 16 starts cutting and therefore the cutting unit 16 cuts around the group of snus pouches 1 held by the group of sucking retrieving heads 21; in this manner, once the cuts are completed, the group of snus pouches 1 does not fall by gravity but remains in contact with the group of sucking retrieving heads 21, which are subsequently moved towards the output conveyor 17 on which they release the group of snus pouches 1.

According to what is illustrated in Figures 5, the manufacturing machine 6 comprises an inspection (examination, verification, control) device 22, which is arranged in an inspection station S3 located along the advancement direction D and upstream of the cutting unit 16. The inspection device 22 is configured to capture at least one image of a group of snus pouches 1 which transit in the area of the inspection device 22, namely which are located in the inspection station S3.

According to what is illustrated in Figure 5, under the cutting unit 16, a collection container 23 is provided (possibly coupled to a shredding device), which receives the two overlapped wrapping material bands 12 after the cut (separation) of the snus pouches 1 and to receive also possible defective snus pouches 1 which were not cut by the cutting unit 16 and therefore were not retrieved by the transfer unit 18 and possible defective snus pouches 1 which were cut by the cutting unit 16 and, after being initially grabbed by the transfer unit 18, are left falling by gravity from the transfer unit 18. Preferably, the shredding device arranged upstream of the collection container 23 transversely (namely perpendicular to the advancement direction D) cuts what remains of the overlapped wrapping material bands 12 so as to produce a series of thin strips.

According to what is schematically illustrated in Figure 5, the forming conveyors 7 support respective sealing devices 24, which are arranged around each pocket 10 and are configured to create (by applying pressure and heat), in the joining area 9, the seal 5 of the edge 4 of each snus pouch 1. In particular, each sealing device 24 comprises at least one heating element configured to increase a temperature (namely to heat) around each pocket 10 and therefore in the area where the edge 4 of a corresponding snus pouch 1 is located. In the embodiment illustrated in Figure 5, both forming drums 7 are provided with respective sealing devices 24 (and thus both contribute to heating, up to the partial melting, the two overlapped wrapping material bands 12 around the pockets 10 containing the snus pouches 1); according to an alternative embodiment not illustrated, only one of the two forming conveyors 7 is provided with a respective sealing device 24 (therefore the other forming conveyor 7 in the sealing process only has the function of generating a suitable mechanical pressure in cooperation with the first forming conveyor 7).

In other words, at least one forming conveyor 7 is heated at least around the corresponding pockets 10 so as to obtain a heat sealing (which requires the simultaneous application of heat and pressure) of the two wrapping material bands 12 in the joining area 9, namely so as to create around each snus pouch 1 the annular seal 5 which is closed so as to form a ring around the edge 4 of the snus pouch 1. Preferably, both forming conveyors 7 are heated (at least) around the corresponding pockets 10 so as to obtain a heat sealing of the two wrapping material bands 12 in the joining area 9. For example, around each pocket 10 of a forming conveyor 7, a heating element (typically an electrical resistance) having an annular shape surrounding the pocket 10 could be embedded inside the forming conveyor 7.

The heating of the forming conveyors 7 in the area of the pockets 10, besides allowing obtaining the heat sealing of the two wrapping material bands 12 in the joining area 9, also allows aiding the wrapping material bands 12 in taking the shape of the pockets 10 by thermoplastic effect; namely, the wrapping material bands 12 are thermoplastic and thus their heating in contact with the forming drums increases the malleability of the wrapping material bands 12 which thus more easily and with greater precision assume the shape of the pockets 10 when they are pushed into the pockets 10 by the deforming heads of the respective insertion devices 13.

According to a possible embodiment, the walls of the pockets 10 are heated at a lower temperature (for the sole purpose to obtain a softening of the two wrapping material bands 12 at the moment of their deformation inside the respective pockets 10 by the corresponding insertion devices 13), whereas the walls of the forming conveyors 7 around the pockets 10 are heated at a higher temperature so as to obtain the heat sealing of the two wrapping material bands 12 in the joining area 9.

More in general, at least one forming conveyor 7 comprises a plurality of sealing devices (for example electrical resistances that generate heat for a heat sealing or sonotrodes for an ultrasonic sealing), each of which has a shape closed so as to form a ring and is arranged around a corresponding pocket 10 to create, in the joining area 9 between the two forming conveyors 7, a seal of the two wrapping material bands 12 so as to form the seal 5 closed so as to form a ring around the edge 4 of the respective snus pouch 1. Also in the case of ultrasonic sealing, the forming conveyors 7 can be heated not in order to obtain a heat sealing of the two wrapping material bands 12 in the joining area 9, but to obtain a softening of the two wrapping material bands 12 at the moment of their deformation inside the respective pockets 10 by the corresponding insertion devices 13.

According to what is illustrated in Figure 5, the manufacturing machine 6 comprises a further sealing device 25 which is arranged downstream of the joining area 9 (namely downstream of the wrapping system consisting of the two forming conveyors 7) is independent of and separate from the sealing device 24 (namely acts on the same snus pouch 1 in a different moment subsequent with respect to the action of the sealing device 24), and is configured to consolidate (reinforce, rivet, improve, stouten, strengthen) the seal 5 of the edge 4 of each snus pouch 1. In other words, the seal 5 of the edge 4 of each pouch is not executed in one sole operation, but is executed in two stages, namely is started in the joining area 9 by the sealing devices 24 and is ended subsequently downstream of the joining area 9 by the sealing device 25.

According to a preferred embodiment illustrated in Figure 5, the sealing device 25 is arranged along the conveying path (immediately) downstream of the joining area 9 (namely downstream of the two forming conveyors 7).

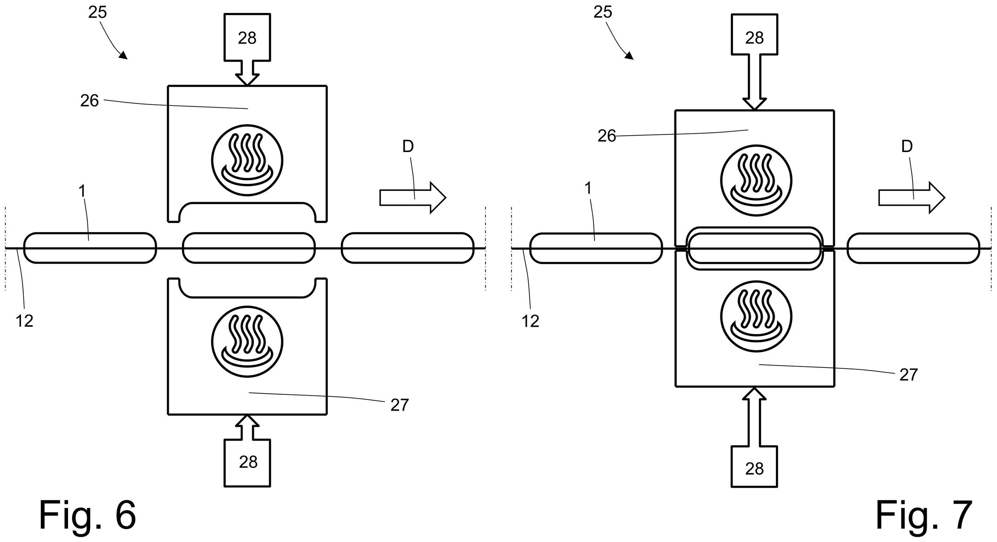

According to what is illustrated in Figures 6-9, the sealing device 25 comprises two sealing heads 26 and 27, which are opposite each other and are arranged on opposite sides of the snus pouches 1 (namely of the path followed by the snus pouches 1 advanced by the conveying device 15). Furthermore, the sealing device 25 comprises an actuator system 28 configured to move (perpendicular to the advancement direction D of the two overlapped wrapping material bands 12) at least one sealing head 26 between a transport position (illustrated in Figures 6, 8 and 9), in which the two sealing heads 26 and 27 are spaced apart by a row of snus pouches 1 arranged between the two sealing heads 26 and 27, and a work position (illustrated in Figure 7), in which the two sealing heads 26 and 27 press from opposite sides against the edge 4 of each snus pouch 1 of the row of snus pouches 1 arranged between the two sealing heads 26 and 27. In the embodiment illustrated in the accompanying figures, the actuator system 28 is configured to move both sealing heads 26 and 27 in opposite directions perpendicular to the advancement direction D of the two overlapped wrapping material bands 12; according to a different embodiment not illustrated, the actuator system 28 is configured to move perpendicular to the advancement direction D of the two overlapped wrapping material bands 12 only one of the two sealing heads 26 and 27, whereas the other sealing head 26 or 27 remains still.

According to a possible embodiment illustrated in Figures 6 and 7, the sealing device 25 comprises heating elements configured to increase a temperature of the sealing heads 26 and 27; in this embodiment, the sealing device 25 creates a thermal seal (namely with the same sealing methodology also used by the sealing device 24).

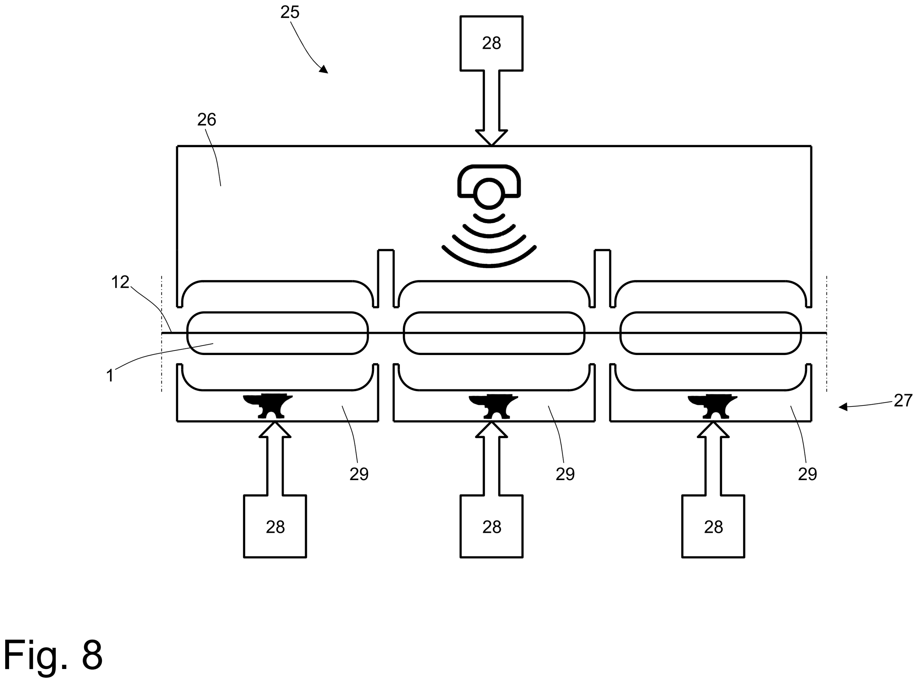

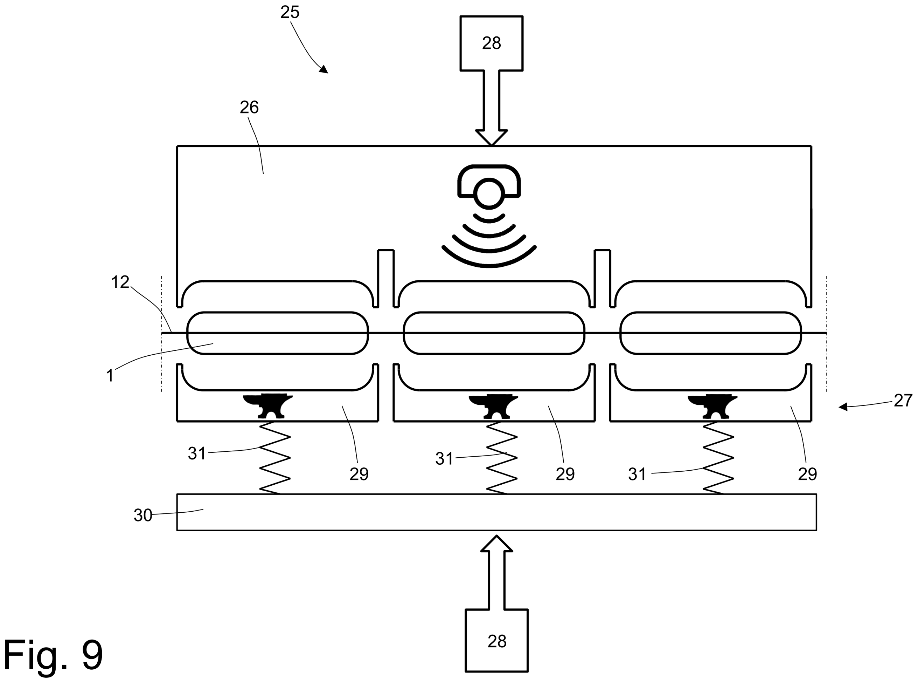

According to an alternative embodiment illustrated in Figures 8 and 9, the sealing device 25 is configured to create a cold seal, in particular an ultrasonic (or alternatively a pulse) cold seal. In particular, in the case where the sealing device 25 creates an ultrasonic seal, it comprises at least one sonotrode coupled to the sealing head 26 and at least one anvil coupled to the sealing head 27. In particular, there is an ultrasonic generator which provides a high-frequency sinusoidal electrical pulse to a vibrating assembly which comprises a converter designed to transform the electrical pulse into a mechanical vibration movement; a booster amplifies the mechanical vibration movement and transfers it to the sonotrode.

In the embodiment illustrated in Figures 8 and 9 (but the same principle could also be applied to the embodiment illustrated in Figures 6 and 7), the sealing head 27 comprises a plurality of active elements 29 (which preferably define the anvils for the ultrasonic seal), which are side by side, are each shaped so as to operate with one single snus pouch 1 and are movable independently of one another towards and away from the other sealing head 26. In this manner, each active element 29 of the sealing head 27 (namely each anvil for the ultrasonic seal) can self-adjust to reach an optimal (namely perfectly parallel) coupling to the sealing head 26 (in which the sonotrode for the ultrasonic seal is arranged) thus ensuring the execution of a high-quality ultrasonic seal. In other words, this solution allows individually compensating the inevitable constructive tolerances of the snus pouches 1 to ensure an optimal (namely perfectly parallel) coupling between each active element 29 of the sealing head 27 (namely each anvil for the ultrasonic seal) and the sealing head 26 (in which the sonotrode for the ultrasonic seal is arranged).

According to the embodiment illustrated in Figure 8, each active element 29 is provided with its own actuator of the actuator system 28; according to the embodiment illustrated in Figure 9, all active elements 29 are mounted on a common support 30 by means of the interposition of corresponding elastic bodies 31 (which for example can consist of mechanical springs or pneumatic springs).

Based on what set forth above, it is evident that in the embodiment illustrated in Figures 8 and 9, a (thermal) sealing mode used by the sealing devices 24 is different from a (an ultrasonic) sealing mode used by the sealing device 25. Instead, in the embodiment illustrated in Figures 6 and 7, a (thermal) sealing mode used by the sealing devices 24 is the same as a (thermal) sealing mode used by the sealing device 25.

In the embodiment illustrated in the accompanying figures, the snus pouches 1 contain respective quantities 2 of snus; alternatively, the snus pouches 1 contain respective quantities 2 of a loose product different from the snus (for example tea or other powdered herb mixtures for infusion or for other uses).

The embodiments described herein can be combined with one another.

The manufacturing machine 6 described above has numerous advantages.

Firstly, the manufacturing machine 6 described above allows achieving high hourly productivity (measured as the number of snus pouches 1 produced in the time unit) ensuring a high qualitative standard, namely ensuring that every snus pouch 1 is perfectly closed and, at the same time, ensuring the integrity of the quantity 2 of snus contained in every snus pouch 1. This result is obtained thanks to the fact of creating the seal 5 of the edge 4 of each snus pouch 1 in two distinct steps: an initial step (in which each seal 5 is prepared) in the joining area 9 thanks to the action of the sealing devices 24 and a final step (in which each seal 5 is completed) downstream of the joining area 9 thanks to the action of the sealing device 25.

In fact, creating the seal 5 of the edge 4 of each snus pouch 1 in the joining area 9 between the two forming conveyors 7 has two disadvantages: it is difficult to ensure the correct execution of the seal 5 operating at high hourly productivity since the forming conveyors 7 must execute many operations and may not be specialized only for executing the seal (unlike the sealing device 25 which is dedicated to the sole seal) and it is necessary to bring the contours of the pockets 10 to particularly high temperatures which can exceedingly overheat the quantities 2 of snus contained in the pockets 10. Instead, being able to count on the consolidation of the seals 5 operated by the sealing device 25, it is no longer indispensable to create, in the joining area 9, perfect seals 5 and the temperatures of the contours of the pockets 10 can also be reduced all to the benefit of the integrity of the quantities 2 of snus contained in the pockets 10.

It is important to note that it is preferable for the sealing device 25 to operate in an ultrasonic manner, since it is a "*cold*" sealing methodology (namely that minimizes the transmission of heat) which avoids transmitting (further) heat to the quantities 2 of snus contained in the snus pouches 1. Alternatively, in the case where the sealing device 25 creates a seal of the thermal type, it will not be required excessively high temperatures since the edge of the pouches results to be pre-sealed by the sealing device 24.

Furthermore, the manufacturing machine 6 described above is particularly compact and allows an operator who is in the proximity of the manufacturing machine 6 to reach with his/her hands all the various parts of the manufacturing machine 6 without having to make unnatural movements.

Finally, the manufacturing machine 6 described above is relatively simple and cost-effective to manufacture.

### LIST OF THE REFERENCE NUMERALS OF THE FIGURES

- 1: snus pouch
- 2: quantity
- 3: cup-shaped element
- 4: edges
- 5: seal
- 6: manufacturing machine
- 7: forming drums
- 8: rotation axes
- 9: joining area
- 10: pockets
- 11: feeding unit
- 12: wrapping material band
- 13: insertion devices
- 14: feeding unit
- 15: conveying device
- 16: cutting unit
- 17: output conveyor
- 18: transfer unit
- 19: support drum
- 20: rotation axis
- 21: retrieving arm
- 22: inspection device
- 23: collection container
- 24: sealing device
- 25: sealing device
- 26: sealing head
- 27: sealing head
- 28: actuator system
- 29: active elements
- 30: common support
- 31: elastic bodies
- S1: feeding station
- S2: feeding station
- S3: inspection station
- D: advancement direction

## Claims

1. A manufacturing machine (6) for the production of pouches (1), each containing a quantity (2) of a loose product, in particular snus; the manufacturing machine (6) comprises:
a first forming conveyor (7), preferably a forming drum mounted so as to rotate around a first rotation axis (8), which has at least one pocket (10) shaped so as to reproduce in negative part of a shape of the pouch (1);
a second forming conveyor (7), preferably a forming drum mounted so as to rotate around a second rotation axis (8) parallel to the first rotation axis (8), which is coupled to the first forming conveyor (7) so as to define a joining area (9) comprised between the two forming conveyors (7);
a first feeding unit (11) configured to feed, in a first feeding station (S1) arranged upstream of the joining area (9), a first wrapping material band (12);
a second feeding unit (11) configured to feed, in a second feeding station (S1) arranged upstream of the joining area (9), a second wrapping material band (12) so that the first wrapping material band (12) and the second wrapping material band (12) overlap each other in the joining area (9), thereby forming each pouch (1);
a third feeding unit (14) configured to feed, in a third feeding station (S2) arranged between the first feeding station (S1) and the joining area (9), a quantity (2) of loose product into the pocket (10) of the first forming conveyor (7) with the interposition of the first wrapping material band (12); and
a first sealing device (24), which is arranged and configured to create, in the joining area (9), a seal (5) of an edge (4) of a pouch (1);
the manufacturing machine (6) is **characterized in that** it comprises a second sealing device (25), which is arranged downstream of the joining area (9), is independent of and separate from the first sealing device (24) and is configured to consolidate the seal (5) of the edge (4) of each pouch (1).

2. The manufacturing machine (6) according to claim 1, wherein the first sealing device (24) is carried by at least one of the two forming conveyors (7), in particular is arranged around the pocket (10) of the first forming conveyor (7), so as to create a seal (5) of an edge (4) of a pouch (1) in the joining area (9).

3. The manufacturing machine (6) according to claim 2, wherein the first sealing device (24) comprises at least one first heating element configured to increase a temperature around the pocket (10).

4. The manufacturing machine (6) according to claim 1 or 2 or 3, wherein:
there is a conveying device (15), which is arranged downstream of the joining area (9) and is configured to advance the overlapping wrapping material bands (12) containing the pouches (1) along a conveying path in an advancement direction (D); and
the second sealing device (25) is arranged along the conveying path.

5. The manufacturing machine (6) according to any one of the claims from 1 to 4, wherein the second sealing device (25) comprises at least one heating element configured to consolidate the seal (5) of the edge (4) of each pouch (1) by increasing the temperature thereof.

6. The manufacturing machine (6) according to any one of the claims from 1 to 4, wherein the second sealing device (25) is configured to consolidate the seal (5) of the edge (4) of each pouch (1) by means of a cold seal, in particular an ultrasonic cold seal.

7. The manufacturing machine (6) according to any one of the claims from 1 to 6, wherein the second sealing device (25) comprises:
two sealing heads (26, 27), which are opposite each other and are arranged on opposite sides of the pouches (1); and
an actuator system (28) configured to move at least one sealing head (26) between a transport position, in which the two sealing heads (26, 27) are spaced apart by a pouch (1) arranged between the two sealing heads (26, 27), and a work position, in which the two sealing heads (26, 27) press from opposite sides against the edge (4) of a pouch (1) arranged between the two sealing heads (26, 27).

8. The manufacturing machine (6) according to claims 6 and 7, wherein the second sealing device (25) comprises at least one sonotrode coupled to a sealing head (26) and at least one anvil coupled to the other sealing head (27).

9. The manufacturing machine (6) according to any one of the preceding claims, wherein:
the forming conveyors (7) are configured to create, together, a row of pouches (1) side by side; and
the second sealing device (25) is configured to simultaneously consolidate the seal (5) of the edge (4) of all the pouches (1) of a same row.

10. The manufacturing machine (6) according to claim 7 and 9, wherein at least one sealing head (27) comprises a plurality of active elements (29), which are side by side, are each shaped so as to operate with one single pouch (1) and are movable independently of one another towards and away from the other sealing head (26).

11. The manufacturing machine (6) according to claim 10, wherein the active elements (29) are mounted on a common support (30) by means of the interposition of corresponding elastic bodies (31).

12. A manufacturing method for the production of pouches (1), each containing a quantity (2) of a loose product, in particular snus; the manufacturing method comprises the steps of:
advancing a first forming conveyor (7), preferably a forming drum mounted so as to rotate around a first rotation axis (8), having a pocket (10) shaped so as to reproduce in negative part of a shape of the pouch (1);
advancing a second forming conveyor (7), preferably a forming drum mounted so as to rotate around a second rotation axis (8) parallel to the first rotation axis (8), which is coupled to the first forming conveyor (7) so as to define a joining area (9) comprised between the two forming conveyors (7);
feeding, by means of a first feeding unit (11) and in a first feeding station (S1) arranged upstream of the joining area (9), a first wrapping material band (12);
feeding, by means of a second feeding unit (11) and in a second feeding station (S1) arranged upstream of the joining area (9), a second wrapping material band (12) so that the first wrapping material band (12) and the second wrapping material band (12) overlap each other in the joining area (9), thereby forming the pouch (1);
feeding, by means of a third feeding unit (14) and in a third feeding station (S2) arranged between the first feeding station (S1) and the joining area (9), the quantity (2) of loose product into the pocket (10) of the first forming conveyor (7) covered by the first wrapping material band (12); and
creating, in the joining area (9), a seal (5) of an edge (4) of a pouch (1) by means of a first sealing device (24);
the manufacturing method is **characterized in that** it comprises the step of consolidating the seal (5) of the edge (4) of each pouch (1) by means of a second sealing device (25), which is arranged downstream of the joining area (9) and is independent of and separate from the first sealing device (24).

13. A manufacturing machine (6) for the production of pouches (1), each containing a quantity (2) of a loose product, in particular snus; the manufacturing machine (6) comprises:
a first feeding unit (11) configured to feed a first wrapping material band (12);
a second feeding unit (14) configured to feed the quantities (2) of loose product;
a wrapping system, which forms the first wrapping material band (12) so as to obtain, together, a row of side-by-side pouches (1) containing the quantities (2) of loose product; and
a sealing device (25), which is arranged downstream of the wrapping system, is configured to simultaneously create a seal (5) of an edge (4) of all the pouches (1) of a same row and comprises two sealing heads (26, 27), which are opposite each other and are arranged on opposite sides of the pouches (1);
the manufacturing machine (6) is **characterized in that** at least one sealing head (27) comprises a plurality of active elements (29), which are side by side, are each shaped so as to operate with one single pouch (1) and are movable independently of one another towards and away from the other sealing head (26).

14. The manufacturing machine (6) according to claim 13, wherein the active elements (29) are mounted on a common support (30) by means of the interposition of corresponding elastic bodies (31).

15. A manufacturing method for the production of pouches (1), each containing a quantity (2) of a loose product, in particular snus; the manufacturing method comprises the steps of:
feeding, by means of a first feeding unit (11), a first wrapping material band (12);
feeding, by means of a second feeding unit (14), the quantities (2) of loose product;
forming, by means of a wrapping system, the wrapping material band (12) so as to obtain, together, a row of side-by-side pouches (1) containing the quantities (2) of loose product; and
simultaneously creating a seal (5) of an edge (4) of all the pouches (1) of a same row by means of a sealing device, which is arranged downstream of the wrapping system and comprises two sealing heads (26, 27), which are opposite each other and are arranged on opposite sides of the pouches (1);
the manufacturing method is **characterized in that** at least one sealing head (27) comprises a plurality of active elements (29), which are side by side, are each shaped so as to operate with one single pouch (1) and are movable independently of one another towards and away from the other sealing head (26).
